# EUROPEAN PATENT APPLICATION

(11) **EP 4 116 937 A1**
(43) Date of publication of application: **11.01.2023**
(21) Application number: 21764158.8
(22) Date of filing: 26.02.2021
(51) Int. Cl.: G06T 19/00, G06Q 50/02, G06F 3/01

(54) **INFORMATION PROCESSING DEVICE, INFORMATION PROCESSING METHOD, AND INFORMATION PROCESSING PROGRAM**

(30) Priority: 06.03.2020 JP 2020038390
(71) Applicant: Sony Group Corporation, Tokyo 108-0075 (JP)
(72) Inventor: ICHIKAWA, Miwa, Tokyo 108-0075 (JP); TAJIMA, Daisuke, Tokyo 108-0075 (JP); YUMIBA, Hiromu, Tokyo 108-0075 (JP); ISHII, Tomohiro, Tokyo 108-0075 (JP); FUNABASHI, Masatoshi, Tokyo 141-0022 (JP)
(74) Representative: D Young & Co LLP
(86) International application number: PCT/JP2021/007530
(87) International publication number: WO 2021/177186

(57) **Abstract**

Aiming to allow a user to accurately grasp information regarding a virtual object. An information processing apparatus (10) according to an embodiment includes: a presentation control unit (1123) that determines a timing of transition of a virtual object, which is a virtually presented object, based on a distance according to a display field angle and a display range of the virtual object; and a presentation creating unit (1124) that controls the transition of the virtual object to be output based on the timing determined by the presentation control unit (1123).

## Description

### Field

The present disclosure relates to an information processing apparatus, an information processing method, and an information processing program.

### Background

As an example of the agricultural methods, there is an agricultural method referred to as Synecoculture (registered trademark), which is based on no cultivation, no fertilization, and no pesticide. Synecoculture (registered trademark) is influenced by various ecosystem constituents constituting an ecosystem, making it difficult for a worker to learn Synecoculture (registered trademark) in a short period of time, leading to the necessity of having assistance from a skilled person. Therefore, in recent years, attention has been paid to a technology in which a skilled person in a farm field (for example, a field or a farm) remotely assists a worker in agriculture.

In the assistance of Synecoculture (registered trademark), there is a need to remotely give an accurate instruction to a worker in a remote place such as a farm field. Therefore, in recent years, augmented reality (AR) has attracted attention as a technology of giving an accurate instruction based on vision to a worker in a remote location.

### Citation List

### Patent Literature

Patent Literature 1: WO 2017/061281 A

### Summary

### Technical Problem

However, in the conventional AR technology, when approaching the virtual object from a position where it is possible to view the entire object (virtual object) (such as an icon, for example) displayed in AR representation at a position corresponding to the real space, the worker may not be able to grasp a part of the virtual object. This is because a part of the virtual object does not fall within a field angle of the display field angle depending on the distance between the worker and the virtual object. In this case, the worker may not be able to appropriately grasp the work place (work area) instructed to approach by the skilled person. This can cause a failure for the skilled person to accurately guide the worker.

In view of this, the present disclosure proposes novel and improved information processing apparatus, information processing method, and information processing program capable of allowing a user to accurately grasp information regarding a virtual object.

### Solution to Problem

According to the present disclosure, an information processing apparatus is provided that includes: a presentation control unit that determines a timing of transition of a virtual object, which is a virtually presented object, based on a distance according to a display field angle and a display range of the virtual object; and a presentation creating unit that controls the transition of the virtual object to be output based on the timing determined by the presentation control unit.

### Brief Description of Drawings

FIG. 1 is a diagram illustrating a configuration example of an information processing system according to an embodiment.
FIG. 2 is a diagram illustrating an implemented example of the information processing system according to the embodiment.
FIG. 3 is a diagram illustrating an implemented example of the information processing system according to the embodiment.
FIG. 4 is a diagram illustrating an implemented example of the information processing system according to the embodiment.
FIG. 5 is a diagram illustrating an outline of functions of the information processing system according to the embodiment.
FIG. 6 is a diagram illustrating an outline of functions of the information processing system according to the embodiment.
FIG. 7 is a block diagram illustrating a configuration example of the information processing system according to the embodiment.
FIG. 8 is a diagram illustrating an example of a storage unit according to the embodiment.
FIG. 9 is a flowchart illustrating a flow of processing in an information processing apparatus according to the embodiment.
FIG. 10 is a diagram illustrating an outline of functions of the information processing system according to the embodiment.
FIG. 11 is a diagram illustrating an outline of functions of the information processing system according to the embodiment.
FIG. 12 is a diagram illustrating an example of an application example according to the embodiment.
FIG. 13 is a hardware configuration diagram illustrating an example of a computer that implements functions of the information processing apparatus.

### Description of Embodiments

A preferred embodiment of the present disclosure will be described in detail hereinbelow with reference to the accompanying drawings. Note that redundant descriptions will be omitted from the present specification and the drawings by assigning the same reference signs to components having substantially the same functional configuration.

Note that the description will be provided in the following order.
1. One embodiment of present disclosure
   1.1. Introduction
   1.2. Configuration of information processing system
2. Implemented example of information processing system
   2.1. Confirmation of farm field and movement to work place
   2.2. Work
   2.3. Confirmation after work
3. Function of information processing system
   3.1. Outline of functions
   3.2. Functional configuration example
   3.3. Processing of information processing system
   3.4. Variations of processing
4. Application examples
   4.1. Target object other than farm field
5. Hardware configuration example
6. Summary

### <<1. One embodiment of present disclosure>>

### <1.1. Introduction>

In the following description, the worker in a farm field is appropriately referred to as a "user". The user may be a user who undergoes AR experience as a worker in a farm field. In the embodiment, the user is not a worker of an actual farm field but a person to undergo AR experience as a farm field worker. Furthermore, hereinafter, a skilled person in the farm field who instructs the user is appropriately referred to as an "instructor". The instructor may be an instructor or an instructing body that instructs the user who undergoes AR experience as a worker in the farm field. In the embodiment, the instructor is an instructor or an instructing body that instructs the user who undergoes AR experience as the worker in the farm field, not a skilled person in the actual farm field.

### <1.2. Configuration of information processing system>

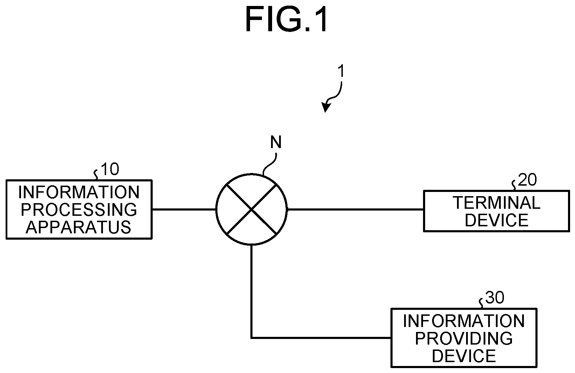

A configuration of an information processing system 1 according to the embodiment will be described. FIG. 1 is a diagram illustrating a configuration example of the information processing system 1. As illustrated in FIG. 1, the information processing system 1 includes an information processing apparatus 10, a terminal device 20, and an information providing device 30. The information processing apparatus 10 can be connected to various types of devices. For example, the terminal device 20 and the information providing device 30 are connected to the information processing apparatus 10, and information exchange is performed between the devices. The information processing apparatus 10 is wirelessly connected to the terminal device 20 and the information providing device 30. For example, the information processing apparatus 10 performs near field wireless communication using Bluetooth (registered trademark) with the terminal device 20 and the information providing device 30. Note that the terminal device 20 and the information providing device 30 may be connected to the information processing apparatus 10 in a wired channel or via a network.

### (1) Information processing apparatus 10

The information processing apparatus 10 is an information processing apparatus that controls the transition of a virtual object output by the terminal device 20, for example, based on a timing of transition of the virtual object determined based on a distance according to the display field angle and the display range of the virtual object. Specifically, the information processing apparatus 10 first determines the timing of transition of the virtual object based on the distance according to the display field angle and the display range of the virtual object. Subsequently, the information processing apparatus 10 controls the transition of the virtual object based on the determined timing. The information processing apparatus 10 then provides control information for controlling the transition of the virtual object to the terminal device 20.

Furthermore, the information processing apparatus 10 also has a function of controlling the overall operation of the information processing system 1. For example, the information processing apparatus 10 controls the overall operation of the information processing system 1 based on information exchanged between individual devices. Specifically, the information processing apparatus 10 controls the transition of the virtual object output by the terminal device 20 based on the information received from the information providing device 30, for example.

The information processing apparatus 10 is implemented by a personal computer (PC), a work station (WS), or the like. Note that the information processing apparatus 10 is not limited to a PC, a WS, or the like. For example, the information processing apparatus 10 may be an information processing apparatus such as a PC or a WS equipped with a function as the information processing apparatus 10 as an application.

### (2) Terminal device 20

The terminal device 20 is a wearable device such as see-through eyewear (HoloLens) capable of outputting AR representation.

The terminal device 20 outputs the virtual object based on the control information provided from the information processing apparatus 10.

### (3) Information providing device 30

The information providing device 30 is an information processing apparatus that provides information regarding a virtual object to the information processing apparatus 10. For example, the information processing apparatus 10 provides information regarding a virtual object based on information regarding acquisition of information regarding the virtual object.

The information providing device 30 is implemented by a PC, a WS, or the like. Note that the information providing device 30 is not limited to a PC, a WS, or the like. For example, the information providing device 30 may be an information processing apparatus such as a PC or a WS equipped with a function as the information providing device 30 as an application.

### <<2. Implemented example of information processing system>>

The configuration of the information processing system 1 has been described above. Next, an implemented example of the information processing system 1 will be described. In the embodiment, a farm field is not an actual farm field but a simulated farm field for AR experience, and thus is appropriately referred to as an "AR farm field". Furthermore, in the embodiment, it is assumed that a user U11 wears see-through eyewear, with a restriction on the field angle. In addition, in the embodiment, it is assumed that there is a work place in the farm field.

### <2.1. Confirmation of farm field and movement to work place>

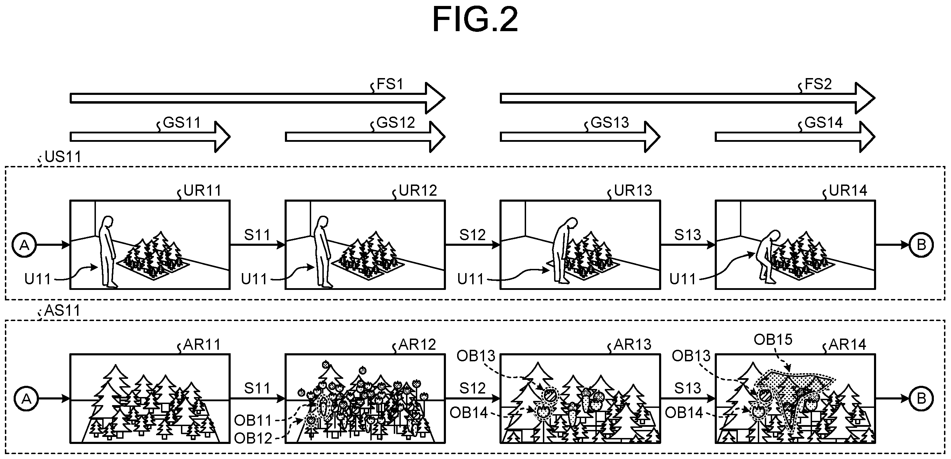

FIG. 2 is a diagram illustrating a scene FS1 in which the user U11 as a target of AR experience confirms the farm field and a scene FS2 in which the user U11 moves to the work place. FIG. 2 includes an action scene US11 indicating an action of the user U11 during the AR experience and an AR scene AS11 indicating the AR representation displayed together with the action of the user U11. Hereinafter, the action scene US and the AR scene AS will be described in association with each other. Note that action images UR11 to UR14 correspond to AR images AR11 to AR14, respectively.

FIG. 2 first illustrates an instruction scene GS11 in which the user U11 is instructed as "Let's start work. Hold the tomato seedling". The action image UR11 is an image illustrating a scene in which the user U11 holds a tomato seedling and waits at a place slightly away from the farm field. The AR image AR11 is an image indicating AR representation displayed on the terminal device 20. The AR image AR11 is in a state with no AR representation, and thus displays the entire background of the real space. Next, in response to an operation by the instructor, the information processing system 1 displays, in AR representation, a virtual object of the vegetation into the AR farm field (S11). Subsequently, the user U11 proceeds to an instruction scene GS12 instructed as "This is the view of the entire farm field".

The action image UR12 is an image indicating a scene in which the user U11 grasps the entire farm field by having an overhead view of the farm field. The AR image AR12 is an image indicating the AR representation displayed on the terminal device 20. In the AR image AR12, a virtual object of vegetation is displayed in the AR farm field. For example, the AR image AR12 includes a display of a virtual object OB11 of tomato, a virtual object OB12 of a carrot, and the like. In the AR image AR12, the virtual object OB11 and the virtual object OB12 are denoted by reference numerals as an example of the virtual object for convenience of description, but in addition, reference numerals may also be assigned to other virtual objects included in the AR image AR12. Note that a scene obtained by combining the instruction scene GS11 and the instruction scene GS12 is a scene FS1. Subsequently, the user U11 proceeds to an instruction scene GS13 instructed as "Come close to work place for today".

An action image UR13 is an image indicating a scene in which the user U11 approaches the work place. The information processing system 1 performs processing of limiting the display range of the virtual object of vegetation according to the action of the user U11 (S12). The AR image AR13 is an image indicating the AR representation displayed on the terminal device 20. The AR image AR13 has a limited display range of the virtual object of the vegetation displayed in the AR image AR12. For example, in the AR image AR13, the display range of the virtual object is limited such that only information that allows the user U11 to handle within a predetermined time (for example, within a time corresponding to a daily working time) is displayed. With this limitation, the information processing system 1 can accurately guide the user U11 to the work place. The AR image AR13 includes the display of a virtual object OB13 of potato, a virtual object OB14 of cabbage, for example. In the AR image AR13, the virtual object OB13 and the virtual object OB14 are denoted by reference numerals as an example of the virtual object for convenience of description, but in addition, reference numerals may also be assigned to other virtual objects included in the AR image AR13. Next, in response to the operation by the instructor, the information processing system 1 performs AR representation of virtual objects being visualized information visualizing the complexity (diversity) of vegetation (S13). Subsequently, the user U11 proceeds to an instruction scene GS14 including an instruction "This indicates complexity of the vegetation. Let's plant the seedlings in places with low complexity".

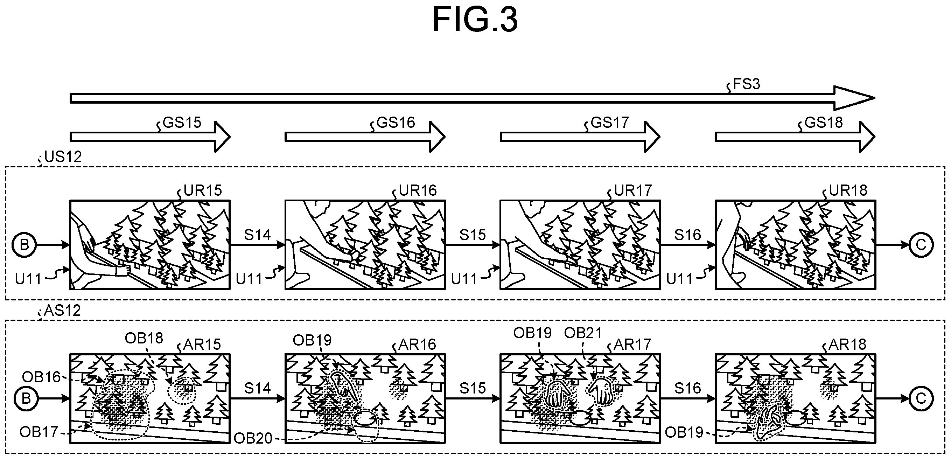

The action image UR14 is an image indicating a scene in which the user U11 confirms points for improvement. The AR image AR14 is an image indicating the AR representation displayed on the terminal device 20. The AR image AR14 displays a virtual object OB15 visualizing the complexity of vegetation in AR representation. The AR image AR14 displays, in AR representation, the virtual object OB15 that is a mesh three-dimensional graph indicating the complexity of vegetation, for example. The virtual object OB15 indicates the complexity of vegetation according to the height of the mesh three-dimensional graph. For example, the downward recess of the virtual object OB15 indicates a location where the vegetation is not rich, that is, the work of the user U11 is necessary. This makes it possible for the information processing system 1 to accurately indicate a location requiring work to the user U11. Note that a scene FS2 is a combination of the instruction scene GS13 and the instruction scene GS14. The processing proceeds to the scene illustrated in FIG. 3.

### <2.2. Work>

FIG. 3 is a diagram illustrating a scene FS3 in which the user U11 performs AR experience of work. FIG. 3 includes: an action scene US12 indicating the action of the user U11; and an AR scene AS12 indicating the AR representation displayed in association with the action of the user U11. Hereinafter, the action scene US and the AR scene AS will be described in association with each other. Note that the action images UR15 to UR18 correspond to the AR images AR15 to AR18, respectively.

FIG. 3 includes an instruction scene GS15 in which the user U11 is instructed as "Let's squat down and work. Take care not to damage the roots". An action image UR15 is an image illustrating a scene in which the user U11 squats and waits. The AR image AR15 is an image indicating the AR representation displayed on the terminal device 20. In response to the operation by the instructor, the AR image AR15 displays a virtual object visualizing the range of the root of the vegetation. For example, the AR image AR15 display virtual objects OB16 to OB18 visualizing the range of the root of the vegetation, and the like. This makes it possible for the information processing system 1 to accurately indicate the root part of the vegetation that should not be damaged to the user U11. In the AR image AR15, the virtual object OB16 and the virtual object OB18 are denoted by reference numerals as an example of the virtual object for convenience of description, but in addition, reference numerals may also be assigned to other virtual objects included in the AR image AR15. Next, in response to the operation by the instructor, the information processing system 1 performs real-time AR representation of a virtual object visualizing the motion of the hand of the instructor (S14). This makes it possible for the instructor to accurately give a pointing instruction even from a remote location. Note that the operation performed in step S14 by the information processing system 1 is not limited to the case of displaying, in AR representation in real time, the virtual object that presents a visualized motion of the hand of the instructor. For example, the information processing system 1 may capture an image of the motion of the hand of the instructor in advance to display, in AR representation, the virtual object that presents the visualized motion of the hand. As another example, the information processing system 1 may create a motion of a hand by using a virtual object of a hand created in advance to display, in AR representation, the virtual object that presents a visualized motion of the hand. Subsequently, the user U11 proceeds to an instruction scene GS16 instructed as "This seems to be a good place to plant the seedling".

The action image UR16 is an image illustrating a scene in which the user U11 plants tomato seedlings at a place instructed by the instructor. The AR image AR16 is an image indicating the AR representation displayed on the terminal device 20. In response to the operation by the instructor, the AR image AR16 performs real-time display of a virtual object visualizing the movement of the hand of the instructor. For example, the AR image AR16 displays a virtual object OB19 visualizing the movement of the hand of the instructor. The virtual object OB19 changes in real time according to the movement of the hand of the instructor. Furthermore, the AR image AR16 displays a virtual object visualizing a location requiring work according to the operation by the instructor. For example, the AR image AR16 displays a virtual object OB20 visualizing a location requiring work. With this configuration, the information processing system 1 can accurately give a pointing instruction to a location requiring work by performing AR representation of the portion requiring work together with the movement of the hand of the instructor. In the AR image AR16, the virtual object OB19 and the virtual object OB20 are denoted by reference numerals as an example of the virtual object for convenience of description, but in addition, reference numerals may also be assigned to other virtual objects included in the AR image AR16. Next, in response to the operation by the instructor, the information processing system 1 performs real-time AR representation of a virtual object visualizing detailed or model behavior indicated by the movement of the hand of the instructor (S15). With this configuration, the instructor can accurately instruct the method of work including nuances. Subsequently, the user U11 proceeds to an instruction scene GS17 instructed as "Cover with soil like this".

The action image UR17 is an image illustrating a scene in which the user U11 covers the seedlings with soil following the model behavior indicated by the instructor. The AR image AR17 is an image indicating the AR representation displayed on the terminal device 20. In response to the operation by the instructor, the AR image AR17 performs real-time display of a virtual object visualizing the movement of the hand of the instructor. For example, the AR image AR17 displays a virtual object OB19 and a virtual object OB21 visualizing the movement of the hand of the instructor. The virtual object OB19 changes in real time according to the movement of the right hand of the instructor. The virtual object OB21 changes in real time according to the movement of the left hand of the instructor. With this configuration, the information processing system 1 performs AR representation of the movement of both hands of the instructor, making it possible to perform pointing instruction more accurately. In the AR image AR17, the virtual object OB19 and the virtual object OB21 are denoted by reference numerals as an example of the virtual object for convenience of description, but in addition, reference numerals may also be assigned to other virtual objects included in the AR image AR17. Next, in response to the operation by the instructor, the information processing system 1 performs real-time AR representation of a virtual object visualizing feedback indicated by the movement of the hand of the instructor (S16). With this operation, the instructor can reassure the user U11 by indicating the feedback. Subsequently, the user U11 proceeds to an instruction scene GS18 instructing "That seems to be good".

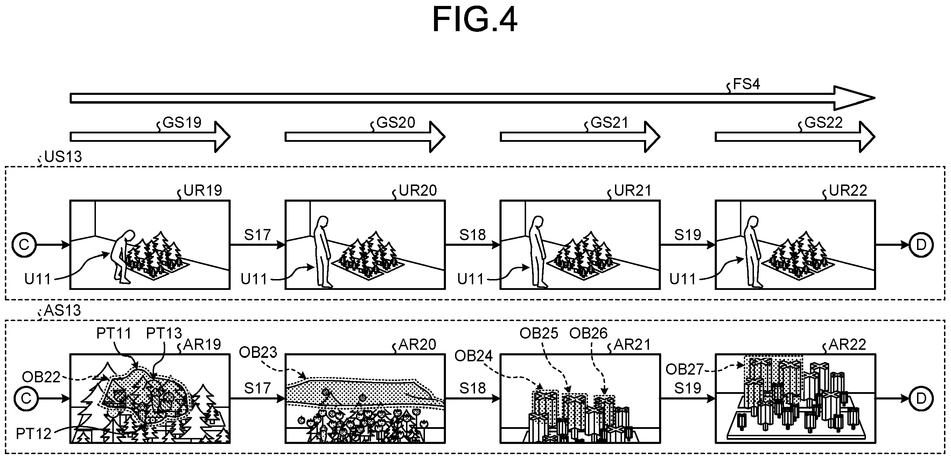

The action image UR18 is an image indicating a scene in which the user U11 confirms the feedback from the instructor and stands up. The AR image AR18 is an image indicating the AR representation displayed on the terminal device 20. In response to the operation by the instructor, the AR image AR18 performs real-time display of a virtual object visualizing the movement of the hand of the instructor indicating the feedback. For example, the AR image AR18 displays a virtual object OB19 visualizing the movement of the hand of the instructor indicating the feedback. The virtual object OB19 changes in real time according to the movement of the hand of the instructor indicating the feedback. With this configuration, the information processing system 1 performs AR representation of the feedback of the instructor, making it possible to perform pointing instruction more accurately. In the AR image AR18, the virtual object OB19 is denoted by reference numeral as an example of the virtual object for convenience of description, but in addition, reference numerals may also be assigned to other virtual objects included in the AR image AR18. Note that a scene FS3 is a combination of the instruction scenes GS15 to GS18. The processing proceeds to the scene illustrated in FIG. 4.

### <2.3. Confirmation after work>

FIG. 4 is a diagram illustrating a scene FS4 of confirming the work performed by the user U11. FIG. 4 includes: an action scene US13 indicating the action of the user U11; and an AR scene AS13 indicating the AR representation displayed in association with the action of the user U11. Hereinafter, the action scene US and the AR scene AS will be described in association with each other. Note that the action images UR19 to UR22 correspond to the AR images AR19 to AR22, respectively.

FIG. 4 illustrates an instruction scene GS19 in which the user U11 is instructed as "Higher diversity has been obtained". The action image UR19 is an image illustrating a scene in which the user U11 reviews a portion where work has been performed. The AR image AR19 is an image indicating the AR representation displayed on the terminal device 20. In response to the operation by the instructor, the AR image AR19 displays, in AR representation, a virtual object OB22 visualizing the complexity of the vegetation. The AR image AR19 displays, in AR representation, the virtual object OB22 that is a mesh three-dimensional graph indicating the complexity of vegetation, for example. The virtual object OB22 indicates the complexity according to the difference in height. For example, the virtual object OB22 indicates that a location PT11 has high complexity and rich vegetation. In addition, the virtual object OB22 indicates that a location PT12 has low complexity and non-rich (poor) vegetation. Furthermore, a location PT13 is a location where the user U11 has planted a seedling in the scene FS3. The virtual object OB22 indicates that the location PT13 has higher complexity and richer vegetation now. With this configuration, the information processing system 1 can allow the user U11 to feel the effect of work. In the AR image AR19, the virtual object OB22 is denoted by reference numeral as an example of the virtual object for convenience of description, but in addition, reference numerals may also be assigned to other virtual objects included in the AR image AR19. Next, in response to the operation by the instructor, the information processing system 1 displays, in AR representation, the virtual object visualizing the complexity of the entire farm field (S17). With this operation, the instructor can make it easier for the user U11 to find other points for improvement. Subsequently, the user U11 proceeds to an instruction scene GS20 instructed as "Entire farm field seems to be good".

The action image UR20 is an image illustrating a scene in which the user U11 looks out from a place slightly away from the farm field. The AR image AR20 is an image indicating the AR representation displayed on the terminal device 20. In response to the operation by the instructor, the AR image AR20 displays, in AR representation, a virtual object OB23 visualizing the complexity of the vegetation in the entire farm field. The AR image AR20 displays, in AR representation, the virtual object OB23 that is a mesh three-dimensional graph indicating the complexity of vegetation in the entire farm field, for example. This makes it possible for the information processing system 1 to accurately indicate other points for improvement to the user U11. In the AR image AR20, the virtual object OB23 is denoted by reference numeral as an example of the virtual object for convenience of description, but in addition, reference numerals may also be assigned to other virtual objects included in the AR image AR20. Next, in response to the operation by the instructor, the information processing system 1 displays, in AR representation, a virtual object visualizing a predicted future vegetation growth degree (S18). With this configuration, the instructor can raise the motivation of the user U11. Subsequently, the user U11 proceeds to an instruction scene GS21 instructing "Interested in the growth. Let's see how it grows two months from now".

An action image UR21 is an image indicating a scene in which the user U11 observes the entire farm field. The AR image AR21 is an image indicating the AR representation displayed on the terminal device 20. In response to the operation by the instructor, the AR image AR21 displays a virtual object visualizing predicted growth of the vegetation in the future. For example, the AR image AR21 displays virtual objects OB24 to OB26 and the like visualizing the predicted vegetation growth in the future. With this configuration, the information processing system 1 can facilitate further improvement in the motivation of the user U11. In the AR image AR21, the virtual objects OB24 to OB26 are denoted by reference numerals as an example of the virtual object for convenience of description, but in addition, reference numerals may also be assigned to other virtual objects included in the AR image AR21. Next, in response to the operation by the instructor, the information processing system 1 displays, in AR representation, a virtual object visualizing a predicted future vegetation growth in a predicted harvest time (S19). With this configuration, the instructor can make it easier for the user U11 to determine the harvest time. Subsequently, the user U11 proceeds to an instruction scene GS22 instructing "Will grow like this in the harvest time. Can be harvested in this size."

An action image UR22 is an image indicating a scene in which the user U11 observes the entire farm field. The AR image AR22 is an image indicating the AR representation displayed on the terminal device 20. In response to the operation by the instructor, the AR image AR21 displays, in AR representation, a virtual object OB27 visualizing predicted growth of the vegetation in the harvest time, and the like. With this configuration, the information processing system 1 can facilitate further improvement in the motivation of the user U11 for the harvest. In the AR image AR22, the virtual object OB27 is denoted by reference numeral as an example of the virtual object for convenience of description, but in addition, reference numerals may also be assigned to other virtual objects included in the AR image AR22. Note that a scene FS4 is a combination of the instruction scenes GS19 to GS22.

An implemented example of the information processing system 1 has been described above with reference to the scenes FS1 to FS4.

### <<3. Function of information processing system>>

Next, functions of the information processing system 1 will be described.

### <3.1. Outline of functions>

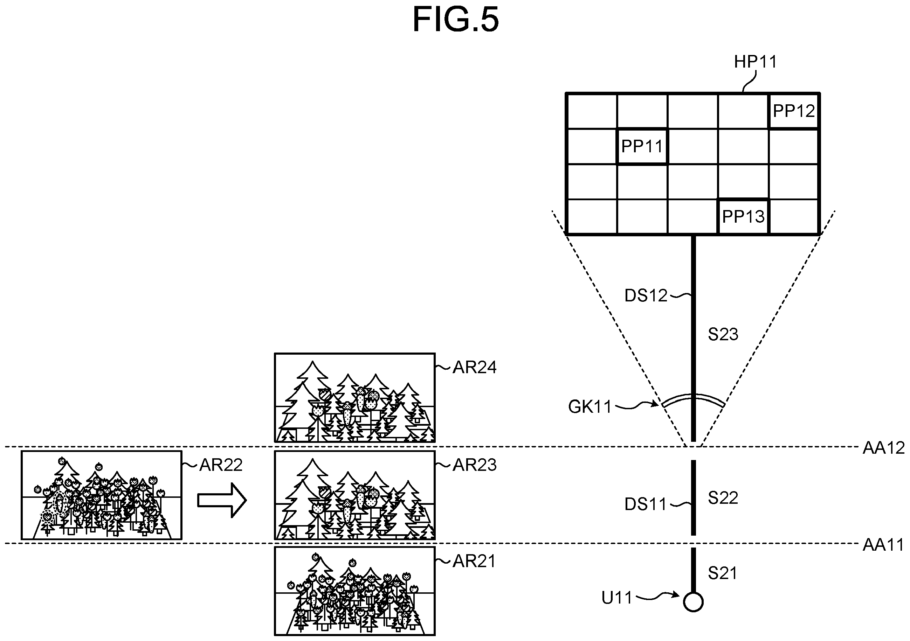

FIG. 5 is a diagram illustrating an outline of functions of the information processing system 1 according to the embodiment. FIG. 5 illustrates a case where the user U11 approaches a work place of a farm field, for example, Note that a display range HP11 indicates a display range of the entire virtual object displayed in the farm field. Work ranges PP11 to PP13 indicate a work range (predetermined region) corresponding to the work place in the farm field in the display range included in the display range HP11. The work place is determined by the instructor, for example. Specifically, the information processing system 1 has a configuration in which the instructor selects the work range to determine the selected work range as a work place. A position AA11 and a position AA12 are positions corresponding to the shortest distance from one side of the display range HP11. Specifically, the positions AA11 and AA12 correspond to a distance from a point where a line from the center of the display range HP11 intersects one side of the display range HP11. The position AA12 is a position corresponding to the minimum distance at which the entire display range HP11 can be displayed, based on a display field angle GK11. The position AA11 is a position away from the position AA12 by a predetermined distance. Here, the predetermined distance is, for example, a distance by which the user U11 can perceive the transition of the virtual object. Specifically, the predetermined distance is a distance by which the user U11 can change the action according to the transition of the virtual object. For example, the predetermined distance is a moving distance of a stride length of the user U11 for several steps.

The user U11 first moves to the position AA11 toward the farm field (S21). The AR image AR21 is an image indicating the AR representation displayed on the terminal device 20 when the user U11 moves to the position AA11. The AR image AR21 displays the entire display range HP11. Next, the user U11 moves to the position AA12 toward the farm field (S22). The information processing system 1 determines the timing of transition of the virtual object based on a distance according to the display field angle of the terminal device 20 and the display range HP11. For example, the information processing system 1 sets the position AA11 as a start point of the timing of transition and sets the position AA12 as an end point of the timing of transition. The AR image AR22 is an image indicating the AR representation, before the transition of the virtual object, displayed on the terminal device 20 when the user U11 moves to the position AA12. The AR image AR22 displays the entire display range HP11. The AR image AR23 is an image indicating the AR representation, after the transition of the virtual object, displayed on the terminal device 20 when the user U11 moves to the position AA12. The AR image AR23 displays a part of the display range HP11. By providing the position AA12, the information processing system 1 can allow the user U11 to easily notice the change in transition and to accurately grasp the work place. For example, the information processing system 1 can allow the user to accurately grasp the position and range of the work place. Subsequently, the user U11 moves within the position AA12 toward the farm field (S23). The AR image AR23 displays a work range corresponding to each work place. The AR image AR23 displays the work range PP11, for example. With this configuration, by performing display transition from the position where the entire display range HP11 is displayed to each work range, the information processing system 1 can prevent a situation in which the user U11 loses sight of the work place. Furthermore, by narrowing the work places to be displayed according to the display transition, the information processing system 1 can naturally guide the user U11 to the work place. In this manner, by narrowing the information to be displayed at the timing before each work place goes out of the field angle of the display field angle from the state in which the entire farm field can be grasped, the information processing system 1 makes it possible for the user to accurately grasp the position of each work place included in the entire farm field.

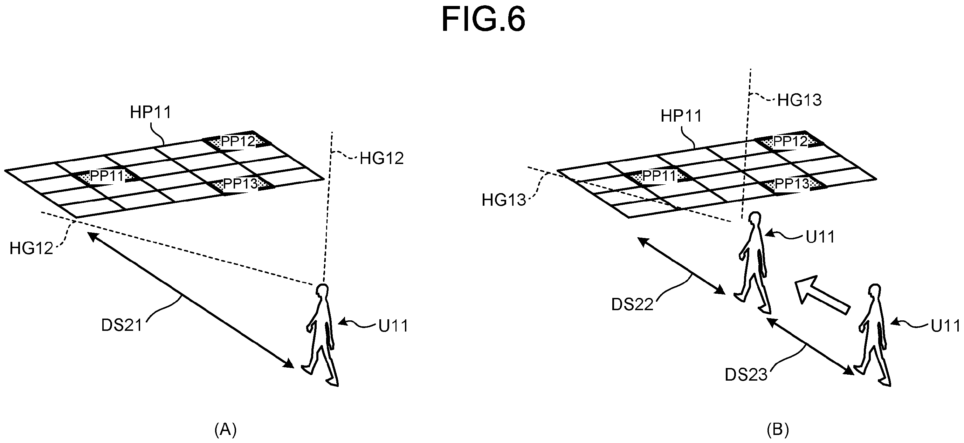

FIG. 6 is a view illustrating a relationship between a display field angle of the terminal device 20 and a distance from the display range HP11. FIG. 6(A) illustrates a case where the entire display range HP11 is included in the display field angle of the terminal device 20. The display field angle HG12 is a display field angle when the user U11 is at a position separated from the display range HP11 by a distance DS21. In this case, the entire display range HP11 is displayed on the terminal device 20. FIG. 6(B) illustrates a relationship between the display field angle of the terminal device 20 and the distance from the display range HP11 when the user U11 approaches the display range HP11 from the distance DS21 by a distance DS23. FIG. 6(B) illustrates a case where a part of the display range HP11 is included in the display field angle of the terminal device 20. A display field angle HG13 is a display field angle when the user U11 is at a position separated from the display range HP11 by a distance DS22. In this case, a part of the display range HP11 is displayed on the terminal device 20. For example, in the work ranges PP11 to PP13, only the work range PP11 included in the display field angle HG13 is displayed on the terminal device 20. With this configuration, the information processing system 1 can highlight the work range PP11. This makes it possible for the information processing system 1 to highlight the work range according to the distance from the display range HP11.

### <3.2. Functional configuration example>

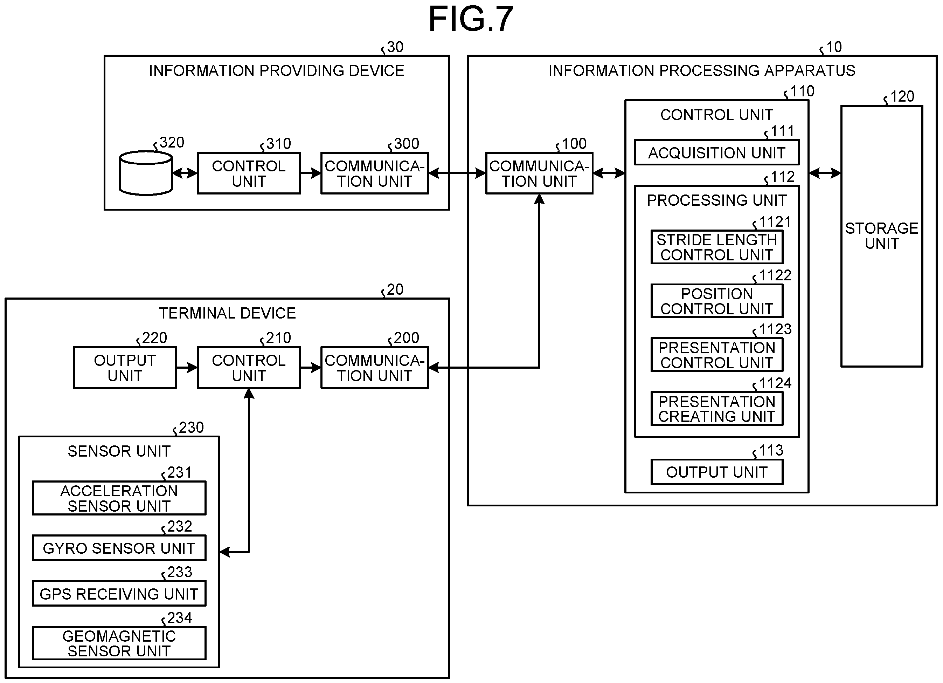

FIG. 7 is a block diagram illustrating a functional configuration example of the information processing system 1 according to the embodiment.

### (1) Information processing apparatus 10

As illustrated in FIG. 7, the information processing apparatus 10 includes a communication unit 100, a control unit 110, and a storage unit 120. Note that the information processing apparatus 10 includes at least the control unit 110.

### (1-1) Communication unit 100

The communication unit 100 has a function of communicating with an external device. For example, in communication with an external device, the communication unit 100 outputs information received from the external device to the control unit 110. Specifically, the communication unit 100 outputs information received from the information providing device 30 to the control unit 110. For example, the communication unit 100 outputs information regarding the virtual object to the control unit 110.

For example, in communication with an external device, the communication unit 100 transmits information input from the control unit 110 to the external device. Specifically, the communication unit 100 transmits information regarding acquisition of information regarding the virtual object input from the control unit 110 to the information providing device 30.

### (1-2) Control unit 110

The control unit 110 has a function of controlling the operation of the information processing apparatus 10. For example, the control unit 110 performs processing for controlling the transition of a virtual object to be output based on a distance according to the display field angle and the display range of the virtual object.

In order to implement the above-described functions, the control unit 110 includes an acquisition unit 111, a processing unit 112, and an output unit 113 as illustrated in FIG. 7.

### · Acquisition unit 111

The acquisition unit 111 has a function of acquiring information for controlling the transition of a virtual object. The acquisition unit 111 acquires sensor information transmitted from the terminal device 20 via the communication unit 100, for example. For example, the acquisition unit 111 acquires sensor information regarding the movement and the position of the terminal device 20, such as acceleration information, gyro information, global positioning system (GPS) information, and geomagnetic information.

The acquisition unit 111 acquires, for example, information regarding the virtual object transmitted from the information providing device 30 via the communication unit 100. For example, the acquisition unit 111 acquires information regarding the display range of the virtual object. Furthermore, for example, the acquisition unit 111 acquires information regarding a predetermined region included in the display range of the virtual object.

### · Processing unit 112

The processing unit 112 has a function for controlling processing of the information processing apparatus 10. As illustrated in FIG. 7, the processing unit 112 includes a stride length control unit 1121, a position control unit 1122, a presentation control unit 1123, and a presentation creating unit 1124.

### · Stride length control unit 1121

The stride length control unit 1121 has a function of performing processing of determining information regarding the movement of the user having the terminal device 20. For example, the stride length control unit 1121 determines information regarding the movement of the user, such as the stride length and the walking speed, based on the information regarding the movement of the terminal device 20. For example, the stride length control unit 1121 determines information regarding the movement of the user based on at least one of the acceleration information and the gyro information. As a specific example, the stride length control unit 1121 determines the stride length of the user by dividing the movement distance of the user by the number of steps taken for the movement distance. Furthermore, the stride length control unit 1121 determines information regarding the traveling direction of the user. For example, the stride length control unit 1121 determines information regarding a relationship between the traveling direction of the user and a direction from the user to the center of the display range of the virtual object.

### · Position control unit 1122

The position control unit 1122 has a function of performing processing of determining information regarding the position of the user having the terminal device 20. The position control unit 1122 determines information regarding the position of the user based on the information regarding the position of the terminal device 20, for example. For example, the position control unit 1122 determines information regarding the position of the user with respect to the display range of the virtual object. Specifically, the position control unit 1122 determines information regarding the position of the user based on at least one of GPS information, geomagnetic information, or information regarding the movement of the user. Furthermore, the position control unit 1122 determines the information regarding the position of the user from the display range of the virtual object based on the information regarding the position of the display range of the virtual object and the information regarding the angle of the display field angle, for example. For example, the position control unit 1122 determines information regarding the position of the user from one side of the display range of the virtual object. Specifically, the position control unit 1122 determines information regarding the position of the user from a point where a straight line connecting the center of the display range of the virtual object and the user intersects with one side of the display range of the virtual object.

### · Presentation control unit 1123

The presentation control unit 1123 has a function of performing processing of determining information regarding the timing of transition of the virtual object. For example, the presentation control unit 1123 determines the display field angle based on information regarding the position of the user. Furthermore, the presentation control unit 1123 determines information regarding the timing of transition of the virtual object based on a distance according to the display field angle and to the display range of the virtual object, for example. For example, the presentation control unit 1123 determines information regarding the timing of transition of the virtual object based on the distance between the user for the display field angle and the display range of the virtual object.

For example, the presentation control unit 1123 determines the timing of transition of the virtual object based on the minimum distance at which the display range of the virtual object falls within the field angle of the display field angle. Specifically, the presentation control unit 1123 determines, as the timing of transition of the virtual object, a distance equal to or more than the minimum distance at which the display range of the virtual object falls within the field angle of the display field angle. Note that the presentation control unit 1123 may determine the distance being the minimum distance at which the display range of the virtual object falls within the field angle of the display field angle, or more, as the start point or the end point of the timing of transition of the virtual object.

For example, the presentation control unit 1123 determines the timing of transition of the virtual object based on the maximum distance at which the user for the display field angle can perceive the transition of the virtual object. Specifically, the presentation control unit 1123 determines, as the timing of transition of the virtual object, a distance equal to or less than the maximum distance at which the user for the display field angle can perceive the transition of the virtual object. Note that the presentation control unit 1123 may determine the distance equal to or less than the maximum distance at which the user for the display field angle can perceive the transition of the virtual object as the start point or the end point of the timing of transition of the virtual object.

### · Presentation creating unit 1124

The presentation creating unit 1124 has a function of performing processing of controlling transition of a virtual object to be output. Specifically, the presentation creating unit 1124 controls the transition of the virtual object based on the timing determined by the presentation control unit 1123. For example, the presentation creating unit 1124 performs control such that the transition of the virtual object is gradually performed. For example, the presentation creating unit 1124 performs control such that the virtual object gradually transitions from the start point to the end point of the timing of transition of the virtual object.

The presentation creating unit 1124 controls the transition of the virtual object according to the operation by the instructor. For example, the presentation creating unit 1124 performs control such that information regarding the virtual object selected by the instructor is to be output. Furthermore, for example, the presentation creating unit 1124 performs control such that information regarding a virtual object on which the user can work within a predetermined time is to be output.

The presentation creating unit 1124 determines the complexity of each virtual object constituting the virtual object. For example, the presentation creating unit 1124 determines the complexity of each virtual object constituting the virtual object based on the attributes of the virtual objects adjacent to each other. Specifically, in a case where the virtual objects adjacent to each other have similar attributes, the presentation creating unit 1124 lowers the complexity of each virtual object having similar attributes. As another example, the presentation creating unit 1124 lowers the complexity of virtual objects having a small number of adjacent virtual objects.

### · Output unit 113

The output unit 113 has a function of outputting information regarding a virtual object. Specifically, the output unit 113 outputs information regarding a virtual object based on the transition of the virtual object controlled by the presentation creating unit 1124. For example, the output unit 113 outputs the virtual object after the transition to a predetermined region included in the display range of the virtual object.

The output unit 113 outputs the virtual object after the transition related to the work to a predetermined region which is the work place. For example, the output unit 113 outputs the virtual object after the transition related to the work to a predetermined region that is a work place determined by the instructor remotely instructing the work.

The output unit 113 outputs visualized information visualizing the complexity related to a target object being a target of the display range of the virtual object. For example, the output unit 113 outputs visualized information indicating the complexity by a mesh three-dimensional graph.

The output unit 113 provides information regarding the virtual object. Specifically, the output unit 113 provides output information via the communication unit 100.

### (1-3) Storage unit 120

The storage unit 120 is implemented by semiconductor memory elements such as random access memory (RAM) and flash drives, or storage devices such as a hard disk or an optical disk. The storage unit 120 has a function of storing data related to processing in the information processing apparatus 10.

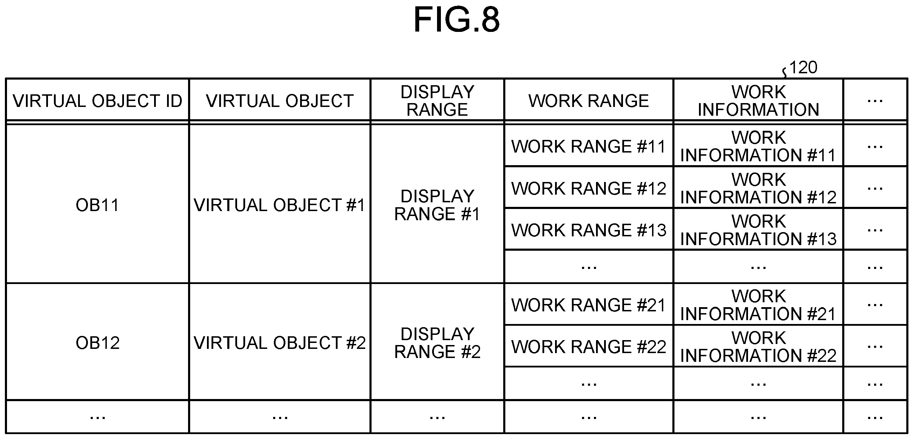

FIG. 8 illustrates an example of the storage unit 120. The storage unit 120 illustrated in FIG. 8 stores information regarding a virtual object. As illustrated in FIG. 8, the storage unit 120 may include items such as "virtual object ID", "virtual object", "display range", "work range", and "work information".

The "virtual object ID" indicates identification information for identifying a virtual object. The "virtual object" indicates information regarding the virtual object. The example illustrated in FIG. 8 illustrates an example in which conceptual information such as "virtual object #1" and" virtual object #2" is stored in "virtual object". Actually, however, information indicating the shape, attribute, and the like of each virtual object constituting the virtual object or coordinate information are stored. The "display range" indicates a display range of the virtual object. Although the example illustrated in FIG. 8 is a case where conceptual information such as "display range #1" and "display range #2" is stored in "display range", coordinate information is stored in "display range" in practice. The "work range" indicates a work range that requires work in the display range of the virtual object. Although the example illustrated in FIG. 8 is a case where conceptual information such as "work range #1" and "work range #2" is stored in "work range", coordinate information is stored in "work range" in practice. The "work information" indicates work information in each work range. The example illustrated in FIG. 8 illustrates an example in which conceptual information such as "work information #1" and "work information #2" is stored in "work information". In practice, however, input information input by the instructor is stored.

### (2) Terminal device 20

As illustrated in FIG. 7, the terminal device 20 includes a communication unit 200, a control unit 210, an output unit 220, and a sensor unit 230.

### (2-1) Communication unit 200

The communication unit 200 has a function of communicating with an external device. For example, in communication with an external device, the communication unit 200 outputs information received from the external device to the control unit 210. Specifically, the communication unit 200 outputs information regarding the virtual object received from the information processing apparatus 10 to the control unit 210.

### (2-2) Control unit 210

The control unit 210 has a function of controlling the overall operation of the terminal device 20. For example, the control unit 210 performs processing of controlling output of information regarding the virtual object.

### (2-3) Output unit 220

The output unit 220 has a function of outputting information regarding the virtual object. For example, the output unit 220 displays information regarding the virtual object in AR representation.

### (2-4) Sensor unit 230

The sensor unit 230 has a function of acquiring sensor information measured by each measuring instrument. For example, the sensor unit 230 acquires sensor information such as acceleration information, gyro information, GPS information, and geomagnetic information. As illustrated in FIG. 7, the sensor unit 230 may include an acceleration sensor unit 231, a gyro sensor unit 232, a GPS receiving unit 233, and a geomagnetic sensor unit 234.

### (3) Information providing device 30

As illustrated in FIG. 7, the information providing device 30 includes a communication unit 300, a control unit 310, and a storage unit 320.

### (3-1) Communication unit 300

The communication unit 300 has a function of communicating with an external device. For example, in communication with an external device, the communication unit 300 outputs information received from the external device to the control unit 310. Specifically, the communication unit 300 outputs information received from the information processing apparatus 10 to the control unit 310. For example, the communication unit 300 outputs information regarding acquisition of information regarding the virtual object to the control unit 310.

### (3-2) Control Unit 310

The control unit 310 has a function of controlling the operation of the information providing device 30. For example, the control unit 310 transmits information regarding the virtual object to the information processing apparatus 10 via the communication unit 300. For example, the control unit 310 transmits information regarding the virtual object acquired by accessing the storage unit 320 to the information processing apparatus 10.

### (3-3) Storage unit 320

The storage unit 320 stores information similar to the information stored in the storage unit 120. Therefore, description of the storage unit 320 is omitted.

### <3.3. Processing of information processing system>

The functions of the information processing system 1 according to the embodiment have been described above. Next, processing of the information processing system 1 will be described.

### (1) Processing in information processing apparatus 10

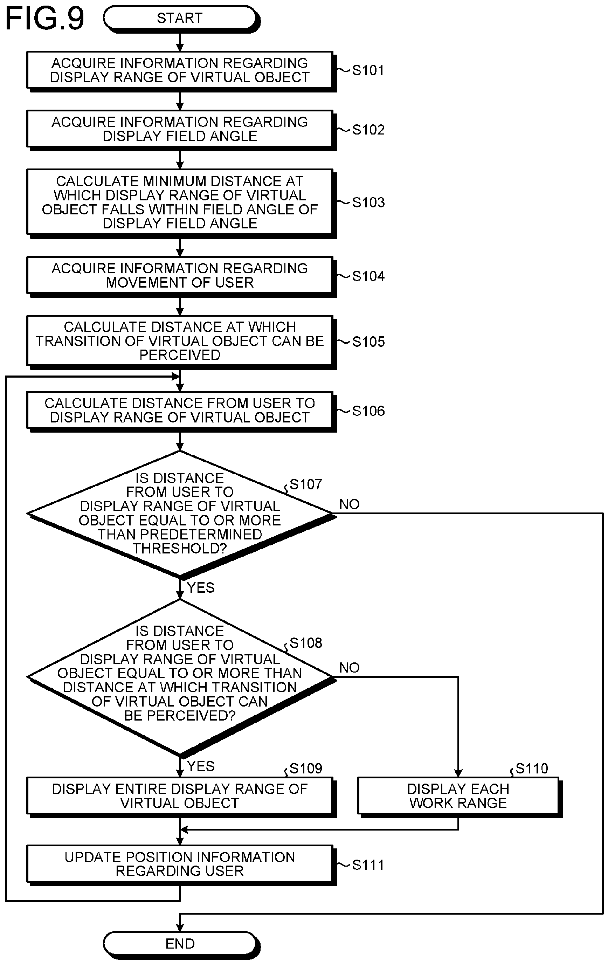

FIG. 9 is a flowchart illustrating a flow of processing in the information processing apparatus 10 according to the embodiment. First, the information processing apparatus 10 acquires information regarding the display range of the virtual object (S101). For example, the information processing apparatus 10 acquires information regarding center coordinates, width, and depth of the display range of the virtual object. Next, the information processing apparatus 10 acquires information regarding the display field angle (S102). For example, the information processing apparatus 10 acquires information regarding the angle of the display field angle.

Next, the information processing apparatus 10 calculates the minimum distance at which the display range of the virtual object falls within the field angle of the display field angle (S103). For example, the information processing apparatus 10 calculates the minimum distance at which the display range of the virtual object falls within the field angle of the display field angle based on the information regarding the width of the display range and the information regarding the angle of the display field angle. Then, the information processing apparatus 10 acquires information regarding the movement of the user (S104). For example, the information processing apparatus 10 acquires information regarding the stride length of the user. Subsequently, the information processing apparatus 10 calculates a distance at which the user can perceive the transition of the virtual object (S105). For example, based on the information regarding the stride length of the user, the information processing apparatus 10 calculates several steps of the stride length of the user as a distance at which the transition of the virtual object can be perceived. The information processing apparatus 10 then calculates a distance from the user to the display range of the virtual object (S106). For example, the information processing apparatus 10 calculates the distance from the user to the display range of the virtual object based on coordinate information of the user and coordinate information of the display range of the virtual object.

Next, the information processing apparatus 10 determines whether the distance from the user to the display range of the virtual object is equal to or more than a predetermined threshold (S107). For example, the information processing apparatus 10 determines whether the distance from the user to the display range of the virtual object is zero or less. In a case where the distance from the user to the display range of the virtual object is less than the predetermined threshold, the information processing apparatus 10 ends the information processing. Furthermore, in a case where the distance from the user to the display range of the virtual object is the predetermined threshold or more, the information processing apparatus 10 determines whether the distance is equal to or more than the distance at which the transition of the virtual object can be perceived (S108). In a case where the distance from the user to the display range of the virtual object is equal to or more than the distance at which the transition of the virtual object can be perceived, the information processing apparatus 10 displays the entire display range of the virtual object (S109). Furthermore, in a case where the distance from the user to the display range of the virtual object is less than the distance at which the transition of the virtual object can be perceived, the information processing apparatus 10 displays each work range (S110). The information processing apparatus 10 then updates position information regarding the user (S111) The processing returns to the processing of S106.

### <3.4. Variations of processing>

The embodiment of the present disclosure has been described above. Next, variations of processing of the embodiment of the present disclosure will be described. Note that the variations of processing described below may be applied to the embodiments of the present disclosure separately, or may be applied to the embodiments of the present disclosure in combination. Furthermore, the variations of processing may be applied instead of the configuration described in the embodiment of the present disclosure, or may be additionally applied to the configuration described in the embodiment of the present disclosure.

### (1) Displaying guidance information

The above-described embodiment is the case where the output unit 113 outputs the virtual object based on the information regarding the transition determined by the processing unit 112. Here, the output unit 113 may output guidance information being display information for guiding the gaze line to a direction other than the direction of the gaze line of the user. For example, the output unit 113 may output guidance information indicating the direction of the gaze line of the user and the direction in which the gaze line of the user is to be guided. With this configuration, the information processing system 1 can accurately guide the user to a work place that the instructor desires to instruct. Furthermore, the information processing system 1 can accurately guide the user to the direction of the display range of the virtual object even when the user is not directing the gaze line to the direction of the display range of the virtual object.

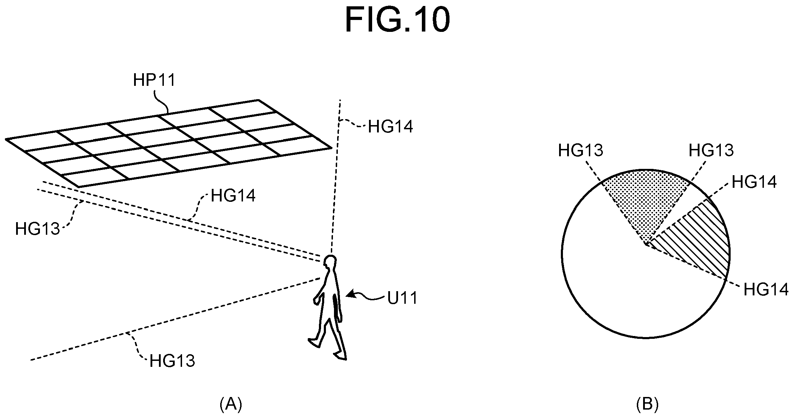

FIG. 10 illustrates an exemplary case where the gaze line is guided to a direction other than the direction of the gaze line of the user U11. FIG. 10(A) illustrates an example of a direction of the gaze line of the user U11 and a direction in which the gaze line of the user U11 is to be directed. In FIG. 10(A), the gaze line of user U11 is guided from the direction in which user U11 actually directs the gaze line to the direction of the display range HP11. The display field angle HG13 is a display field angle in a direction in which the user U11 directs the gaze line. A display field angle HG14 is a display field angle in a direction in which the gaze line of the user U11 is to be guided. FIG. 10(B) illustrates an example of the guidance information to be output. As illustrated in FIG. 10(B), the output unit 113 may output Radar View indicating the direction of the gaze line of the user U11 and the direction in which the gaze line of the user U11 is to be guided by a radar. Furthermore, the output unit 113 may provide the control information regarding the guidance information to the terminal device 20 so that the guidance information is to be output to the terminal device 20. With this configuration, the user U11 can accurately grasp the direction guided by the instructor via the terminal device 20. With this configuration, the information processing system 1 can facilitate further improvement in usability. Note that the guidance information illustrated in FIG. 10(B) is an example, and any guidance information may be output in any mode as long as it is guidance information for guiding the gaze line of the user U11.

### (2) Displaying overhead view information

The output unit 113 may output overhead view information that is display information obtained by viewing the display field angle of the user. For example, the output unit 113 may output overhead view information indicating the relationship (for example, a positional relationship) of the display field angle of the user with respect to the entire display range of the virtual object. With this configuration, the information processing system 1 can accurately allow the user to grasp the position of the user with respect to the entire display range of the virtual object. Furthermore, for example, even in a case where the user is too close to a part of the display range of the virtual object, the information processing system 1 can allow the user to accurately grasp the entire display range of the virtual object. Furthermore, the output unit 113 may output, for example, overhead view information indicating the relationship of the display field angle of the user with respect to each work range. With this configuration, the information processing system 1 can allow the user to accurately grasp the position of the work place. Furthermore, for example, even in a case where the user is too close to a part of the display range of the virtual object, the information processing system 1 can allow the user to accurately grasp the position of the work place.

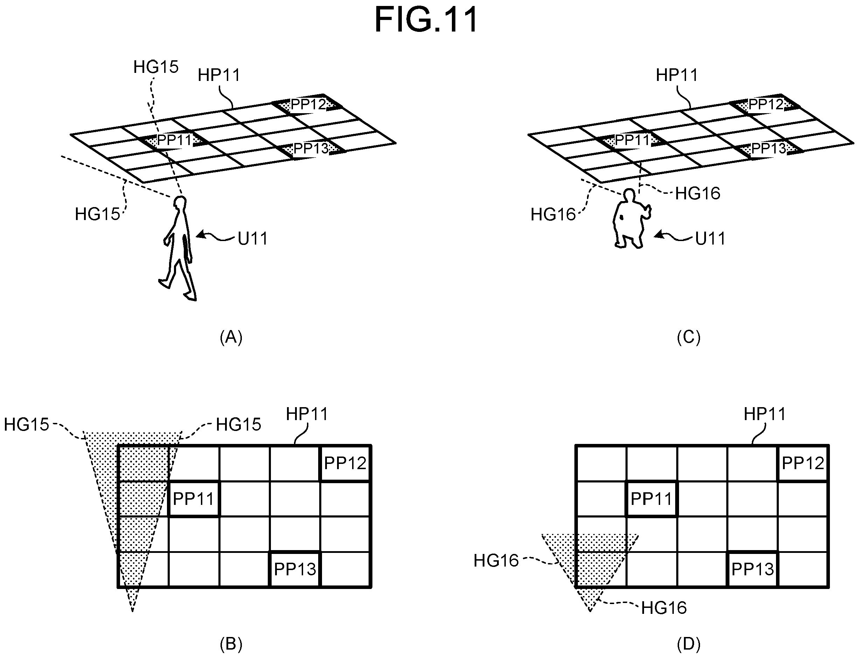

The overhead view information to be output will be described with reference to FIG. 11. The display field angle HG15 and the display field angle HG16 indicate the display field angle regarding the user U11. The display field angle HG15 is a display field angle in a case where the user U11 is in an upright state. The display field angle HG16 is a display field angle in a case where the user U11 is in the seated state. FIG. 11(B) illustrates overhead view information obtained by having an overhead view of the display field angle HG15 illustrated in FIG. 11(A) from directly above. FIG. 11(D) illustrates overhead view information obtained by having an overhead view of the display field angle HG16 illustrated in FIG. 11(C) from directly above. As illustrated in FIGS. 11(B) and 11(D), the output unit 113 may output the overhead view information. Furthermore, the output unit 113 may provide control information regarding the overhead view information to the terminal device 20 so that the overhead view information is to be output to the terminal device 20. With this configuration, the user U11 can accurately grasp, via the terminal device 20, the relationship among the display field angle of the user U11, the work ranges PP11 to PP13, and the display range HP11. With this configuration, the information processing system 1 can facilitate further improvement in usability. Note that the overhead view information illustrated in FIGS. 11(B) and 11(D) is an example, and any type of overhead view information may be output in any mode as long as the overhead view information is overhead view information having an overhead view of the display field angle regarding the user U11.

### (3) Output information using VR, MR, or XR

Although the above-described embodiment is the case where the information processing system 1 uses see-through eyewear capable of outputting an image in AR representation as the terminal device 20, the destination of output is not limited to this example. For example, the information processing system 1 may output the output information to a terminal device for virtual reality (VR), mixed reality (MR), or X reality (XR). Note that XR is a generic term for AR, VR, MR, and the like. For example, the information processing system 1 may output the output information to a head-mounted display for VR, MR, and XR. Furthermore, the information processing system 1 may output the output information for mobile AR that can be experienced by a terminal device such as a smartphone, as the terminal device 20. With this configuration, the information processing system 1 can provide the user with an AR experience using a smartphone, making it possible to facilitate further improvement in usability.

### (4) Output information using projector

Although the above-described embodiment is the case where the information processing system 1 outputs the output information to the terminal device 20, the method of output is not limited to this example. The information processing system 1 may output the output information using, for example, a projector. For example, the information processing system 1 may output the output information by projecting a virtual object on a specific place or a specific target object. In this case, a projection range projected on the specific place or the specific target object is the display range of the virtual object, for example. Furthermore, the information processing system 1 may output the output information using, for example, a terminal device (a smartphone or a mobile device, for example) capable of acquiring position information regarding the user and a projector.

### (5) Location positioning using beacon or AR marker

Although the above-described embodiment is the case where the information processing system 1 uses GPS information to measure the position of the user, determination of position is not limited to this example. The information processing system 1 may determine the information related to the position of the user using another method related to the measurement of the position, such as a beacon or an AR marker. For example, the information processing system 1 may determine information regarding the distance between the user and a specific place or a specific target object by using another method related to measurement of a position, such as a beacon or an AR marker.

### (6) Outputting audio information and tactile information

The above-described embodiment is a case where the position and orientation of the user are guided by outputting guidance information such as radar view when the user is too close to a specific place or a specific target object or when the gaze line of the user is in a direction other than the direction desired by the instructor. In this manner, in the above-described embodiment, the information processing system 1 outputs visual information for guiding the position and orientation of the user. Here, the information processing system 1 may output audio information (for example, voice information or acoustic information) and tactile information (for example, vibration information) together with the visual information. Furthermore, the information processing system 1 may output audio information or tactile information without outputting visual information. For example, the information processing system 1 may output audio information or tactile information corresponding to the content indicated by the visual information.

### (7) Grasping display range of virtual object

When it is difficult to grasp the entire display range of a virtual object, such as when the user is too close to a specific place or a specific target object, or when the gaze line is lowered due to the user being in a seated state, the information processing system 1 may be configured to be able to grasp the entire display range of the virtual object based on imaging information captured by a moving object (for example, a drone), imaging information captured by an imaging device (for example, a camera) at a specific position, or the like.

### (8) Timing of transition

Although the above-described embodiment is the case where the information processing system 1 controls the transition of the virtual object based on the display range of the virtual object and the distance to the user, control method of transition is not limited to this example. For example, the information processing system 1 may control the transition of the virtual object based on the direction of the display range of the virtual object and the direction of the gaze line of the user. For example, the information processing system 1 may determine whether the gaze line of the user is in the direction of the display range of the virtual object, and control the transition of the virtual object such that the virtual object transitions only when the gaze line of the user is in the direction of the display range of the virtual object.

### (9) Moving object

The embodiment described above is a case where the target object being the target of the display range of the virtual object is a target object fixed at a specific position. Here, the target object being the target of the display range of the virtual object may be a moving object not fixed at a specific position. Furthermore, the information processing system 1 may determine a display range of the virtual object such that the virtual object is displayed on the moving object. In this case, the display range of the virtual object dynamically changes according to the movement of the moving object. The information processing system 1 may perform processing for controlling the transition of the virtual object based on a relative distance between the display range of the virtual object and the user.

### (10) User attribute

The information processing system 1 may change the display range of the virtual object according to the attribute of the user. For example, the information processing system 1 may allow the instructor to define the display range of the virtual object in advance for each attribute of the user and output the display range of the virtual object according to the attribute of the user. For example, in a case where the user is a manager who manages a target object being a target of the display range of the virtual object, the information processing system 1 may output the entire display range of the virtual object. As another example, in a case where the user is a worker in charge of a part of the target object being the target of the display range of the virtual object, the information processing system 1 may output only a part of the work range in charge of the worker among the display range of the virtual object.

### (11) Control based on transmittance and sound volume

The information processing system 1 may control the transition of the virtual object by changing the transmittance of the virtual object. For example, the information processing system 1 may control the transition of the virtual object so that the virtual object smoothly transitions by gradually changing the transmittance of the virtual object output after the transition. Note that, in a case where the information processing system 1 outputs audio information, the information processing system 1 may control the transition of the virtual object by changing the sound volume. Furthermore, the information processing system 1 may control the transition of the virtual object by changing three-dimensional position, a direction, a distance, and the like of the sound by stereophonic sound effects (for example, three-dimensional audio), not limited to the sound volume.

### (12) Control based on audio information and tactile information

The information processing system 1 may control the transition of the virtual object by changing audio information and tactile information in conjunction with the visual information. For example, the information processing system 1 may control the transition of the virtual object by changing audio information and tactile information in conjunction with visual information according to the transition of the virtual object.

### (13) Timing of transition when moving away

The above embodiment has described the processing for the information processing system 1 to control the transition of the virtual object by an exemplary case where the user approaches the display range of the virtual object. Here, the information processing system 1 may control the transition of the virtual object based on similar processing even when the user moves away from the display range of the virtual object. Furthermore, when the user moves away from the display range of the virtual object, the information processing system 1 may set a timing different from the case where the user approaches the display range of the virtual object as the timing of transition of the virtual object.

### (14) Control based on user status (state)

The information processing system 1 may control the transition of the virtual object according to the status of the user. The information processing system 1 may control the transition of the virtual object according to the status of the user by predefining the status of the user and the information related to the control of the transition of the virtual object in association with each other. For example, in a case where the user has a work tool, the information processing system 1 may control the transition of the virtual object according to the status of the user. Furthermore, for example, in a case where the user has a work tool, the information processing system 1 may estimate that the user is a worker and control the transition of the virtual object according to the attribute of the user.

### (15) Other limitations

Although the above-described embodiment is the case where the user is a person to undergo AR experience as a worker in a farm field, the user is not limited to this example, and the user may be any person as long as the person is a target of instruction by the instructor. The user may be, for example, a person who undergoes AR experience in a town, an office, a warehouse, and the like. Furthermore, the user may be a person who undergoes VR, MR, or XR experiences.

Although the above embodiment is a case where the instructor is an instructor or an instructing body instructing the user who undergoes AR experience as a worker in a farm field, the instructor is not limited to this example, and any instructor or instruction object is allowable as long as the instructor is an instructor or instruction object that instructs the user.

Although the above-described embodiment is a case where the output unit 113 outputs the virtual object in which the complexity of the vegetation is indicated by the mesh three-dimensional graph, the output is not limited to this example. The output unit 113 may output any piece of visualized information in any form as long as the piece of visualized information indicates the complexity of the target object being the target of the display range of the virtual object. For example, the output unit 113 may output a virtual object in which the complexity of vegetation is indicated by a three-dimensional graph of a shape other than mesh.

Although the above-described embodiment is a case where the output unit 113 outputs the visualized information visualizing the movement of the hand of the instructor, the output of visualized information is not limited to this example. The output unit 113 may output any information in any form as long as the information is visualized information visualizing details and model behavior based on the operation of the instructor. For example, the output unit 113 may output visualized information visualizing not only the motion of the hand of the instructor but also the entire physical motion of the instructor.

### <<4. Application examples>>

The embodiment of the present disclosure has been described above. Next, an application example of the information processing system 1 according to the embodiment of the present disclosure will be described.

### <4.1. Target object other than farm field>

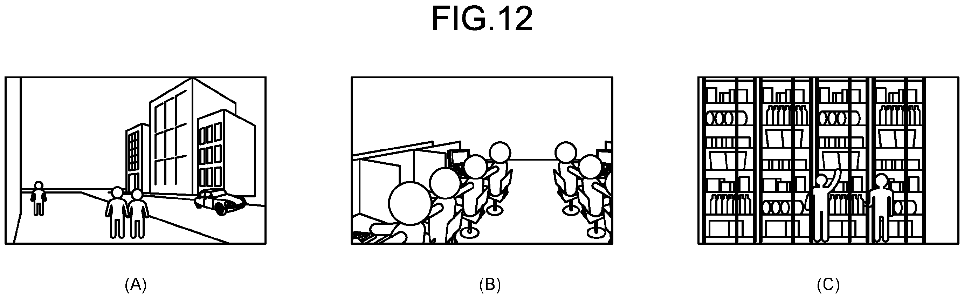

The above embodiment can also be applied to a target object other than a farm field. For example, the above embodiment can also be applied to a case where a plurality of target objects exists in a space such as a town, an office, or a warehouse. In order to allow the user to perceive a specific place or a specific target object, the information processing system 1 may perform narrowing at a timing before the user goes out of the space, for example. In this case, the presentation control unit 1123 may determine the timing before the user goes out of the space as the timing of transition of the virtual object based on the distance to the specific place or the specific target object and the distance until the user goes out of the space. FIG. 12(A) illustrates an example of a town. For example, the information processing system 1 may perform processing for guiding the user to a specific store or a specific building. FIG. 12(B) illustrates an example of an office room. For example, the information processing system 1 may perform processing for guiding the user to a specific department, a specific person, or a specific seat (for example, a vacant seat). FIG. 12(C) illustrates an example of the inside of the warehouse. For example, the information processing system 1 may perform processing for guiding the user to a specific product or a specific type of item. Note that the example illustrated in FIG. 12 is an example, and is not limited to this example.

### <<5. Hardware configuration example>>

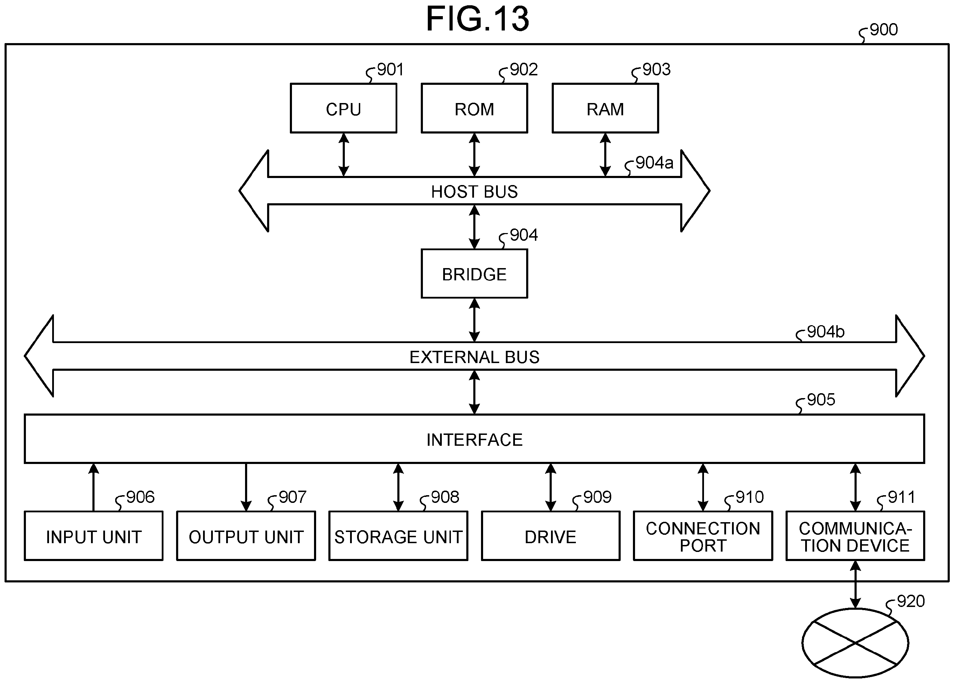

Finally, a hardware configuration example of the information processing apparatus according to the present embodiment will be described with reference to FIG. 13. FIG. 13 is a block diagram illustrating a hardware configuration example of an information processing apparatus according to the present embodiment. Note that an information processing apparatus 900 illustrated in FIG. 13 can implement, for example, the information processing apparatus 10, the terminal device 20, and the information providing device 30 illustrated in FIG. 7. Information processing implemented by the information processing apparatus 10, the terminal device 20, and the information providing device 30 according to the embodiment is implemented in cooperation with software and hardware described below.

As illustrated in FIG. 13, the information processing apparatus 900 includes a central processing unit (CPU) 901, read only memory (ROM) 902, and random access memory (RAM) 903. Furthermore, the information processing apparatus 900 includes a host bus 904a, a bridge 904, an external bus 904b, an interface 905, an input device 906, an output device 907, a storage device 908, a drive 909, a connection port 910, and a communication device 911. Note that the hardware configuration illustrated here is an example, and some of the components may be omitted. In addition, the hardware configuration may further include components other than the components illustrated here.

The CPU 901 functions as, for example, an arithmetic processing device or a control device, and controls the entire or part of operation of each of components based on various programs recorded in the ROM 902, the RAM 903, or the storage device 908. The ROM 902 is a means to store a program loaded by the CPU 901, data used for calculation, and the like. The RAM 903 temporarily or permanently stores, for example, a program loaded by the CPU 901, various parameters that appropriately change when the program is executed, and the like. These are interconnected by a host bus 904a including a CPU bus or the like. The CPU 901, the ROM 902, and the RAM 903 can implement the functions of the control unit 110, the control unit 210, and the control unit 310 described with reference to FIG. 7, for example, in cooperation with software.

The CPU 901, the ROM 902, and the RAM 903 are interconnected via the host bus 904a capable of high-speed data transmission, for example. On the other hand, the host bus 904a is connected to the external bus 904b having a relatively low data transmission speed via the bridge 904, for example. Furthermore, the external bus 904b is connected to various components via the interface 905.

The input device 906 is implemented by a device to which the listener inputs information, such as a mouse, a keyboard, a touch panel, a button, a microphone, a switch, and a lever. Furthermore, the input device 906 may be, for example, a remote control device using infrared rays or other radio waves, or an externally connected device such as a mobile phone or a PDA that supports the operation of the information processing apparatus 900. Furthermore, the input device 906 may include, for example, an input control circuit that generates an input signal based on input information using the above input means and outputs the input signal to the CPU 901. By operating the input device 906, the administrator of the information processing apparatus 900 can input various data to the information processing apparatus 900 and give an instruction on the processing operation.

In addition, the input device 906 can be formed by a device that detects user's movement and position. For example, the input device 906 can include various sensors such as an image sensor (for example, a camera), a depth sensor (for example, a stereo camera), an acceleration sensor, a gyro sensor, a geomagnetic sensor, an optical sensor, a sound sensor, a distance measuring sensor (for example, a time of flight (ToF) sensor), and a force sensor. Furthermore, the input device 906 may acquire information regarding the self-state of the information processing apparatus 900, such as the posture and moving speed of the information processing apparatus 900, and information regarding the surrounding space of the information processing apparatus 900, such as brightness and noise around the information processing apparatus 900. Furthermore, the input device 906 may include a global navigation satellite system (GNSS) module that receives a GNSS signal (for example, a global positioning system (GPS) signal from a GPS satellite) from a GNSS satellite and measures position information including the latitude, longitude, and altitude of the device. Furthermore, regarding the position information, the input device 906 may detect the position by Wi-Fi (registered trademark), transmission and reception using a mobile phone, a PHS, a smartphone, or the like, near field communication, or the like. The input device 906 can implement the function of the sensor unit 230 described with reference to FIG. 7, for example.

The output device 907 is formed by a device capable of visually or audibly notifying the user of acquired information. Examples of such devices include display devices such as CRT display devices, liquid crystal display devices, plasma display devices, EL display devices, laser projectors, LED projectors, and lamps, audio output devices such as speakers and headphones, and printer devices. The output device 907 outputs the results obtained by various processing performed by the information processing apparatus 900, for example. Specifically, the display device visually displays the results obtained by various processing performed by the information processing apparatus 900 in various formats such as texts, images, tables, and graphs. The audio output device converts an audio signal composed of reproduced audio data, acoustic data, or the like into an analog signal and output the signal audibly. The output device 907 can implement the function of the output unit 220 described with reference to FIG. 7, for example.

The storage device 908 is a data storage device formed as an example of a storage unit of the information processing apparatus 900. The storage device 908 is implemented by, for example, a magnetic storage device such as an HDD, a semiconductor storage device, an optical storage device, an optical magnetic storage device, or the like. The storage device 908 may include a storage medium, a recording device that records data on the storage medium, a reading device that reads data from the storage medium, a deleting device that deletes the data recorded on the storage medium, and the like. This storage device 908 stores programs executed by the CPU 901, various data, as well as various data acquired from the outside, and the like. The storage device 908 can implement the function of the storage unit 120 described with reference to FIG. 7, for example.

The drive 909 is a reader/writer for a storage medium, and is built in or externally connected to the information processing apparatus 900. The drive 909 reads information recorded on a removable storage medium such as a mounted magnetic disk, optical disk, magneto-optical disk, or semiconductor memory, and outputs the read information to the RAM 903. The drive 909 can also write information to the removable storage medium.

The connection port 910 is, for example, a port for connecting an external connection device, such as a universal serial bus (USB) port, an IEEE 1394 port, a small computer system interface (SCSI), an RS-232C port, or an optical audio terminal.

The communication device 911 is, for example, a communication interface formed by a communication device or the like for connecting to a network 920. The communication device 911 is, for example, a communication card for wired or wireless Local Area Network (LAN), Long Term Evolution (LTE), Bluetooth (registered trademark), Wireless USB (WUSB), or the like. Furthermore, the communication device 911 may be an optical communication router, an Asymmetric Digital Subscriber Line (ADSL) router, a modem for various communications, or the like. The communication device 911 can exchange signals or the like through the Internet and with other communication devices in accordance with a predetermined protocol such as TCP/IP. The communication device 911 can implement, for example, the functions of the communication unit 100, the communication unit 200, and the communication unit 300 described with reference to FIG. 7.

The network 920 is a wired or wireless transmission path for information transmitted from a device connected to the network 920. For example, the network 920 may include a public network such as the Internet, a telephone network, and a satellite communication network, or various local area networks (LANs) including Ethernet (registered trademark), wide area networks (WANs), or the like. Furthermore, the network 920 may include a dedicated network such as an Internet protocol-virtual private network (IP-VPN).

An example of the hardware configuration capable of implementing the functions of the information processing apparatus 900 according to the embodiment has been described above. Each of the above-described components may be implemented by using a general-purpose member, or may be implemented by hardware devices specialized for the function of individual components. Accordingly, it is possible to appropriately change the hardware configuration to be used according to the technical level at the time of conducting the embodiment.

### <<6. Summary>>

As described above, the information processing apparatus 10 according to the embodiment performs processing for controlling the transition of a virtual object to be output based on a distance according to the display field angle and the display range of the virtual object. With this configuration, the information processing apparatus 10 can allow the user to accurately grasp the information regarding the transition of the virtual object. Furthermore, the information processing apparatus 10 can naturally guide the user according to the transition of the virtual object.

This makes it possible to provide novel and improved information processing apparatus, information processing method, and information processing program capable of allowing a user to accurately grasp information regarding the transition of the virtual object.

Preferred embodiments of the present disclosure have been described in detail hereinbelow with reference to the accompanying drawings.

However, the technical scope of the disclosure is not limited to such examples. It is obvious that a person having ordinary knowledge in the technical field of the present disclosure can come up with various alterations or modifications within the scope of the technical idea described in the claims, and these are understood, of course, to belong to the technical scope of the present disclosure.

For example, each device described in the present specification may be implemented as an independent device, or some or all of the devices may be implemented as separate devices. For example, the information processing apparatus 10, the terminal device 20, and the information providing device 30 illustrated in FIG. 7 may be implemented as independent devices. Furthermore, for example, it may be implemented as a server device connected to the information processing apparatus 10, the terminal device 20, and the information providing device 30 via a network or the like. Alternatively, the function of the control unit 110 included in the information processing apparatus 10 may be included in a server device connected via a network or the like.

Furthermore, the series of processing to be executed by individual devices described in the present specification may be implemented by using any of software, hardware, or a combination of software and hardware. The program constituting the software is stored in advance in, for example, a recording medium (non-transitory medium) provided inside or outside of each of devices. Then, each of programs is read into the RAM at the time of execution by the computer, for example, and is executed by a processor such as a CPU.

Furthermore, the processing described using the flowchart in the present specification do not necessarily have to be executed in the illustrated order. Some processing steps may be performed in parallel. In addition, additional processing steps may be employed, and some processing steps may be omitted.

Furthermore, the effects described in the present specification are merely illustrative or exemplary and are not limited. That is, the technology according to the present disclosure can exhibit other effects that are apparent to those skilled in the art from the description of the present specification in addition to or instead of the above effects.

Note that the following configurations also belong to the technical scope of the present disclosure.
(1) An information processing apparatus including:
   a presentation control unit that determines a timing of transition of a virtual object, which is a virtually presented object, based on a distance according to a display field angle and a display range of the virtual object; and
   a presentation creating unit that controls the transition of the virtual object to be output based on the timing determined by the presentation control unit.
(2) The information processing apparatus according to (1),
   wherein the presentation control unit determines the timing of the transition of the virtual object based on the distance which is a distance between a user for the display field angle and the display range of the virtual object.
(3) The information processing apparatus according to (1) or (2),
   wherein the presentation control unit determines the timing of the transition of the virtual object based on a minimum distance at which the display range of the virtual object falls within a field angle of the display field angle.
(4) The information processing apparatus according to any one of (1) to (3),
   wherein the presentation control unit determines a distance equal to or greater than a minimum distance at which the display range of the virtual object falls within a field angle of the display field angle, as the timing of the transition of the virtual object.
(5) The information processing apparatus according to any one of (1) to (4),
   wherein the presentation control unit determines a distance equal to or less than a maximum distance at which a user for the display field angle can perceive the transition, as the timing of the transition of the virtual object.
(6) The information processing apparatus according to any one of (1) to (5), further including
   an output unit that outputs, based on the transition of the virtual object controlled by the presentation creating unit, the virtual object after the transition to a predetermined region included in the display range of the virtual object.
(7) The information processing apparatus according to (6),
   wherein the output unit outputs, to the predetermined region being a work place used for a work of the user for the display field angle, the virtual object after the transition related to the work.
(8) The information processing apparatus according to (7),
   wherein the output unit outputs the virtual object after the transition related to the work to the predetermined region being the work place and being a work place determined by an instructor who remotely instructs the work.
(9) The information processing apparatus according to (6),
   wherein the output unit outputs visualized information visualizing complexity of individual virtual objects determined based on attributes of virtual objects adjacent to each other among the individual virtual objects constituting the virtual object.
(10) The information processing apparatus according to (9),
   wherein the output unit outputs the visualized information visualizing the complexity indicating the richness of the individual virtual objects based on a difference in a height of display.
(11) The information processing apparatus according to any one of (1) to (10),
   wherein the presentation creating unit controls the transition of the virtual object being a virtual object related to vegetation.
(12) The information processing apparatus according to any one of (1) to (11),
   wherein the presentation creating unit performs control such that the transition of the virtual object is gradually performed.
(13) An information processing method executed by a computer, the method including:
   a presentation control step of determining a timing of transition of a virtual object, which is a virtually presented object, based on a distance according to a display field angle and a display range of the virtual object; and
   a presentation creating step of controlling the transition of the virtual object to be output based on the timing determined by the presentation control step.
(14) An information processing program causing a computer to execute:
   a presentation control procedure of determining a timing of transition of a virtual object, which is a virtually presented object, based on a distance according to a display field angle and a display range of the virtual object; and
   a presentation creating procedure of controlling the transition of the virtual object to be output based on the timing determined by the presentation control procedure.

### Reference Signs List

- 1: INFORMATION PROCESSING SYSTEM
- 10: INFORMATION PROCESSING APPARATUS
- 20: TERMINAL DEVICE
- 30: INFORMATION PROVIDING DEVICE
- 100: COMMUNICATION UNIT
- 110: CONTROL UNIT
- 111: ACQUISITION UNIT
- 112: PROCESSING UNIT
- 1121: STRIDE LENGTH CONTROL UNIT
- 1122: POSITION CONTROL UNIT
- 1123: PRESENTATION CONTROL UNIT
- 1124: PRESENTATION CREATING UNIT
- 113: OUTPUT UNIT
- 120: STORAGE UNIT
- 200: COMMUNICATION UNIT
- 210: CONTROL UNIT
- 220: OUTPUT UNIT
- 300: COMMUNICATION UNIT
- 310: CONTROL UNIT
- 320: STORAGE UNIT

## Claims

1. An information processing apparatus including:
a presentation control unit that determines a timing of transition of a virtual object, which is a virtually presented object, based on a distance according to a display field angle and a display range of the virtual object; and
a presentation creating unit that controls the transition of the virtual object to be output based on the timing determined by the presentation control unit.

2. The information processing apparatus according to claim 1,
wherein the presentation control unit determines the timing of the transition of the virtual object based on the distance which is a distance between a user for the display field angle and the display range of the virtual object.

3. The information processing apparatus according to claim 1,
wherein the presentation control unit determines the timing of the transition of the virtual object based on a minimum distance at which the display range of the virtual object falls within a field angle of the display field angle.

4. The information processing apparatus according to claim 1,
wherein the presentation control unit determines a distance equal to or greater than a minimum distance at which the display range of the virtual object falls within a field angle of the display field angle, as the timing of the transition of the virtual object.

5. The information processing apparatus according to claim 1,
wherein the presentation control unit determines a distance equal to or less than a maximum distance at which a user for the display field angle can perceive the transition, as the timing of the transition of the virtual object.

6. The information processing apparatus according to claim 1, further including
an output unit that outputs, based on the transition of the virtual object controlled by the presentation creating unit, the virtual object after the transition to a predetermined region included in the display range of the virtual object.

7. The information processing apparatus according to claim 6,
wherein the output unit outputs, to the predetermined region being a work place used for a work of the user for the display field angle, the virtual object after the transition related to the work.

8. The information processing apparatus according to claim 7,
wherein the output unit outputs the virtual object after the transition related to the work to the predetermined region being the work place and being a work place determined by an instructor who remotely instructs the work.

9. The information processing apparatus according to claim 6,
wherein the output unit outputs visualized information visualizing complexity of individual virtual objects determined based on attributes of virtual objects adjacent to each other among the individual virtual objects constituting the virtual object.

10. The information processing apparatus according to claim 9,
wherein the output unit outputs the visualized information visualizing the complexity indicating the richness of the individual virtual objects based on a difference in a height of display.

11. The information processing apparatus according to claim 1,
wherein the presentation creating unit controls the transition of the virtual object being a virtual object related to vegetation.

12. The information processing apparatus according to claim 1,
wherein the presentation creating unit performs control such that the transition of the virtual object is gradually performed.

13. An information processing method executed by a computer, the method including:
a presentation control step of determining a timing of transition of a virtual object, which is a virtually presented object, based on a distance according to a display field angle and a display range of the virtual object; and
a presentation creating step of controlling the transition of the virtual object to be output based on the timing determined by the presentation control step.

14. An information processing program causing a computer to execute:
a presentation control procedure of determining a timing of transition of a virtual object, which is a virtually presented object, based on a distance according to a display field angle and a display range of the virtual object; and
a presentation creating procedure of controlling the transition of the virtual object to be output based on the timing determined by the presentation control procedure.
